# EUROPÄISCHE PATENTSCHRIFT

(11) **EP 3 118 628 B1**
(45) Veröffentlichungstag und Bekanntmachung des Hinweises auf die Patenterteilung: **25.08.2021**
(21) Anmeldenummer: 15176410.7
(22) Anmeldetag: 13.07.2015
(51) Int. Cl.: G01N 35/10

(54) **VERFAHREN ZUM PIPETTIEREN VON FLÜSSIGKEITEN IN EINEM AUTOMATISCHEN ANALYSEGERÄT**
METHOD FOR PIPETTING LIQUIDS IN AN AUTOMATIC ANALYZER
PROCEDE DE PIPETAGE DE LIQUIDES DANS UN APPAREIL D'ANALYSE AUTOMATIQUE

(43) Veröffentlichungstag der Anmeldung: 18.01.2017
(73) Patentinhaber: Siemens Healthcare Diagnostics Products GmbH, 35041 Marburg (DE)
(72) Erfinder: Korn, Matthias, 56355 Nastaetten (DE); Moser, Kristin, 65779 Kelkheim (DE); Pufahl, Holger, 65835 Liederbach (DE); Solbach, David, 60316 Frankfurt (DE); Verhalen, Christian, 65201 Wiesbaden (DE)

(56) Entgegenhaltungen:
- EP-A1- 2 172 782
- EP-A1- 2 293 083
- EP-A1- 2 561 929
- WO-A1-2011/091245
- WO-A1-2015/066342

## Beschreibung

Die vorliegende Erfindung liegt auf dem Gebiet der automatischen Analysegeräte und betrifft ein Verfahren zur zum Transfer eines Flüssigkeitsvolumens von einem ersten Flüssigkeitsgefäß in ein zweites Flüssigkeitsgefäß.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Der Transfer von Probenflüssigkeiten oder von Reagenzflüssigkeiten erfolgt üblicherweise mit automatischen Pipettiervorrichtungen. Solche Pipettiervorrichtungen umfassen in der Regel eine senkrecht an einem verfahrbaren oder schwenkbaren Transferarm angeordnete und höhenverstellbare Pipettiernadel, die mit einer Pumpeinheit verbunden ist, so dass mit der Pipettiernadel ein gewünschtes Volumen einer Flüssigkeit aus einem Behälter entnommen und an einem anderen Ort in einen Zielbehälter abgegeben werden kann. Üblicherweise wird die Pipettiernadel mit Hilfe des Transferarms an eine Position über einem Flüssigkeitsbehälter verfahren und dann in den Flüssigkeitsbehälter und die darin enthaltene Flüssigkeit abgesenkt. Nach Entnahme des gewünschten Volumens wird die Pipettiernadel nach oben gefahren und dann mit Hilfe des Transferarms an die gewünschte Zielposition über einem Flüssigkeitsbehälter gefahren, beispielsweise über eine Messzelle. Dort wird die Pipettiernadel wieder abgesenkt, und die Flüssigkeitsmenge wird abgegeben.

Es ist üblich, Pipettiervorrichtungen mit einem Füllstandsensor auszustatten. Dies hat einerseits den Zweck, dass während des Betriebs des automatischen Analysegeräts der Füllstand von Reagenzflüssigkeiten in Reagenzflüssigkeitsbehältern bestimmt werden und an die Steuereinheit gemeldet werden kann. Dadurch wird beispielsweise sichergestellt, dass ein Benutzer rechtzeitig über einen notwendigen Reagenzbehälteraustausch informiert werden kann. Andererseits stellt die Füllstandbestimmung sicher, dass die Pipettiernadel immer ausreichend tief in die zu entnehmende Flüssigkeit eingetaucht wird, um zu vermeiden, dass Luft anstelle von Flüssigkeit angesaugt wird.

Die gängigste Methode zur Füllstandbestimmung ist die kapazitive Füllstandbestimmung. Dazu besteht die Pipettiernadel aus einem elektrisch leitfähigen Material und bildet damit im Grunde die Messelektrode, und sie umfasst ferner eine Referenzelektrode. Aus der Änderung der elektrischen Kapazität zwischen der Pipettiernadel und der Referenzelektrode kann die Füllhöhe kontuierlich bestimmt werden. Eine andere Methode ist die optische Füllstandbestimmung. Dazu umfasst die Pipettiernadel einen optoelektronischen Füllstandsensor bestehend aus einer Lichtquelle und einem Lichtsensor. Beim Eintauchen wird das Licht durch die Flüssigkeit gebrochen und erreicht nicht mehr oder nur abgeschwächt den Lichtsensor. Aus der Abschwächung des Lichtsignals kann die Füllhöhe bestimmt werden.

Problematisch ist, dass es in einzelnen Flüssigkeitsbehältern zu einer Schaumbildung auf der Flüssigkeitsoberfläche kommen kann. Flüssiger Schaum, also von Flüssigkeit umgebene Luftbläschen, entsteht häufig in Tensid-haltigen Reagenzflüssigkeiten oder auch dann wenn beim Pipettieren eines Flüssigkeitsvolumens nicht nur Flüssigkeit, sondern auch Luft aufgenommen und in einen Zielbehälter abgegeben wird. Das Vorhandensein von Schaum auf der Flüssigkeitsoberfläche beeinträchtigt die Bestimmung des Füllstands der Flüssigkeit, weil beim Eintauchen einer mit einem Füllstandsensor ausgestatteten Pipettiernadel bereits der Schaum als Flüssigkeit detektiert wird. Dies führt üblicherweise dazu, dass ein falsch zu hoher Füllstand detektiert wird, was wiederum in der Folge dazu führt, dass bei der Entnahme von Flüssigkeit mindestens ein Teil des angesaugten Volumens aus Schaum besteht. Dadurch kommt es zu Pipettierungenauigkeiten, die letztendlich zu fehlerhaften Messergebnissen führen.

Im Stand der Technik sind verschiedene Vorgehensweisen zur Vermeidung von Pipettierungenauigkeiten in Folge von Schaumbildung bekannt.

In EP-A1-0526210 ist ein Verfahren beschrieben, bei dem mittels einer mit einem Füllstandsensor ausgestatteten Pipettiernadel der Füllstand in einem Reagenzflüssigkeitsbehälter vor und nach dem Ansaugen eines Flüssigkeitsvolumens bestimmt wird. Wenn die Änderung des Füllstandes gegenüber einem vorab festgelegten Wert abnormal ist, zeigt dies das Vorhandensein von Schaum an.

In EP-A1-0990907 ist ein anderes Verfahren beschrieben, bei dem mittels einer mit einem Füllstandsensor ausgestatteten Pipettiernadel beim Eintauchen der Nadel eine kontinuierliche Füllstandbestimmung vorgenommen wird und mit Hilfe einer Logikeinheit ermittelt wird, ob Schaum vorliegt und wenn ja, Maßnahmen eingeleitet werden, damit die Flüssigkeitsoberfläche unter dem Schaum detektiert wird.

Nachteilig ist, dass zur Vermeidung von Pipettierungenauigkeiten Flüssigkeitsbehälter, in denen Schaum detektiert wurde, einen Alarm oder eine Warnung in dem automatischen Analysegerät auslösen beziehungsweise automatisch von weiteren Flüssigkeitsentnahmen ausgeschlossen werden. Dies führt dazu, dass Analysen nicht durchgeführt werden können und dass gegebenenfalls ein Austausch des Flüssigkeitsbehälters durch einen Benutzers erforderlich wird.

Weiterhin problematisch ist, dass durch Bewegung von Flüssigkeitsbehältern oberhalb der Flüssigkeitsoberfläche Flüssigkeitsreste an der Behälterinnenwand anhaften können und dadurch ein zunächst zu niedriger Füllstand in einem Behälter zustande kommt.

Der vorliegenden Erfindung liegt daher die Aufgabe zugrunde, beim automatischen Transfer von Flüssigkeitsvolumina in einem automatischen Analysegerät Pipettierungenauigkeiten zu vermeiden und insbesondere in den Fällen, in denen ein unplausibler Füllstand einer Flüssigkeit gemessen wird, mit einfachen und kostengünstigen Mitteln, eine präzise Flüssigkeitsentnahme möglichst doch zu ermöglichen, so dass auf einen sofortigen Alarm oder einen Austausch des Flüssigkeitsbehälters verzichtet werden kann.

Die Aufgabe wird erfindungsgemäß dadurch gelöst, dass, wenn beim Eintauchen einer Pipettiernadel in eine Flüssigkeit ein unplausibler Füllstand der Flüssigkeit gemessen wird, die Pipettiernadel ohne Ansaugen eines Flüssigkeitsvolumens aus der Flüssigkeit ausgetaucht und dann nochmals eingetaucht wird. Dieser Vorgang kann mehrmals wiederholt werden. Es wurde beobachtet, dass durch das wiederholte Ein- und Austauchen der Pipettiernadel Schaum, der sich in dem Flüssigkeitsbehälter befindet, zerstochen wird und so zumindest in den Fällen, bei denen der unplausible Füllstand auf Schaum zurückzuführen ist, eine präzise Flüssigkeitsentnahme ermöglicht wird. Besonders vorteilhaft ist, dass das erfindungsgemäße Verfahren besonders einfach und kostengünstig, beispielsweise in Form einer entsprechenden Steuerungssoftware, auf jedem herkömmlichen automatischen Analysegerät appliziert werden kann, das über eine automatische Pipettiervorrichtung mit integriertem Füllstandsensor verfügt.

Gegenstand der vorliegenden Erfindung ist also ein Verfahren zum Transfer eines Flüssigkeitsvolumens von einem ersten Flüssigkeitsgefäß in ein zweites Flüssigkeitsgefäß, wobei eine an einem automatisch verfahrbaren oder schwenkbaren Transferarm befestigte Pipettiernadel, die einen

Füllstandsensor aufweist, verwendet wird. Das Verfahren umfasst die Schritte:
a) Eintauchen der Pipettiernadel in die in dem ersten Flüssigkeitsgefäß enthaltenen Flüssigkeit und Messen der Füllstandhöhe;
b) Vergleichen der gemessenen Füllstandhöhe mit einer vorgegebenen Mindestfüllstandhöhe und einer vorgegebenen Maximalfüllstandhöhe;
c) Feststellen, dass die gemessene Füllstandhöhe entweder
   i. die vorgegebene Maximalfüllstandhöhe überschreitet, oder
   ii. die vorgegebene Maximalfüllstandhöhe unterschreitet und die vorgegebene Minimalfüllstandhöhe überschreitet, oder
   iii. die vorgegebene Minimalfüllstandhöhe unterschreitet,
d) Austauchen der Pipettiernadel aus der Flüssigkeit, wobei
   - wenn festgestellt wird, dass die gemessene Füllstandhöhe die vorgegebene Maximalfüllstandhöhe überschreitet oder die vorgegebene Minimalfüllstandhöhe unterschreitet - ohne Ansaugen eines Flüssigkeitsvolumens die Pipettiernadel aus der Flüssigkeit ausgetaucht wird und dann die Schritte a)-d) sooft wiederholt werden bis festgestellt wird, dass die gemessene Füllstandhöhe die vorgegebene Maximalfüllstandhöhe unterschreitet und die vorgegebene Minimalfüllstandhöhe überschreitet und dann vor dem Austauchen der Pipettiernadel das zu transferierende Flüssigkeitsvolumen angesaugt wird und anschließend in das zweite Flüssigkeitsgefäß transferiert wird.

Die vorgegebene Maximalfüllstandhöhe und die vorgegebene Minimalfüllstandhöhe sind für ein gegebenes Flüssigkeitsgefäß, also beispielsweise für ein Probengefäß oder einen Reagenzflüssigkeitsbehälter, entweder vorab festgelegte oder erwartete Größen, oder sie werden aus einer ersten Füllstandmessung und einem bekannten, danach entnommenen Flüssigkeitsvolumen berechnet, oder sie werden nach einer Abgabe eines bekannten Flüssigkeitsvolumens in ein leeres Gefäß berechnet. In den letzten beiden Fällen wird üblicherweise ein Sollwert des Füllstands berechnet und eine Toleranz (+/-) addiert, wodurch die Maximalfüllstandhöhe und die Minimalfüllstandhöhe vorgegeben werden.

Bevorzugterweise werden maximal zehn, besonders vorzugsweise maximal drei, vier oder fünf Wiederholungen der Schritte a)-d) unmittelbar nacheinander durchgeführt. Es wurde beobachtet, dass bereits bei dieser Anzahl von Wiederholungen die präzise Entnahme von Flüssigkeit aus einer signifikant erhöhten Anzahl von Flüssigkeitsgefäßen, für die zunächst ein unplausibler Füllstand bestimmt worden war, ermöglicht wird.

Wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet, wird die Pipettiernadel ohne Ansaugen eines Flüssigkeitsvolumens aus der Flüssigkeit ausgetaucht, und das erste Flüssigkeitsgefäß wird von einer weiteren Flüssigkeitsentnahme ausgeschlossen. Der betroffene Flüssigkeitsbehälter kann beispielsweise mit einer Fehlermeldung gekennzeichnet werden, die einen weiteren automatischen Zugriff verhindert, oder es kann ein Alarm ausgelöst werden, der den notwendigen Austausch des Flüssigkeitsbehälters anzeigt.

Alternativ kann jedoch, wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet, die Pipettiernadel im letzten Schritt der letzten Wiederholung ohne Ansaugen eines Flüssigkeitsvolumens aus der Flüssigkeit ausgetaucht werden und dann für eine Zeitspanne von mindestens 5-600 Sekunden nicht in die Flüssigkeit wieder eingetaucht werden, bevor nach Ablauf der Zeitspanne von mindestens 5-600 Sekunden die Pipettiernadel dann wieder in die in dem ersten Flüssigkeitsgefäß enthaltene Flüssigkeit eingetaucht wird, und das eingangs beschriebene Verfahren mit den Schritten Eintauchen, Messen der Füllstandhöhe, Vergleichen der gemessenen Füllstandhöhe mit einer vorgegebenen Mindestfüllstandhöhe und einer vorgegebenen Maximalfüllstandhöhe, Austauchen etc. wiederholt wird. Es hat sich gezeigt, dass eine Pause zwischen einer ersten und einer zweiten Anzahl von Wiederholungen der Schritte a)-d) dazu führt, dass die präzise Entnahme von Flüssigkeit aus einer noch höheren Anzahl von Flüssigkeitsgefäßen, für die zunächst ein unplausibler Füllstand bestimmt worden war, ermöglicht wird.

In einer bevorzugten Ausführungsform kann die Pipettiernadel während der Zeitspanne von mindestens 5-600 Sekunden zu einer Waschstation verfahren werden, dort gewaschen werden und anschließend wieder zu dem ersten Flüssigkeitsgefäß verfahren werden. In den in automatischen Analysegeräten vorgesehenen Waschstationen für Pipettiernadeln erfolgt üblicherweise eine Reinigung der Pipettiernadel von außen und von innen. Mit diesem Schritt wird das Risiko vermindert, dass eine unplausible Füllstandbestimmung auf Anhaftungen an der Pipettiernadel verursacht wird.

Alternativ kann die Pipettiernadel während der Zeitspanne von mindestens 5-600 Sekunden zu einer Waschstation verfahren werden, dort gewaschen werden und anschließend zu einem dritten Flüssigkeitsgefäß verfahren werden. Dort wird die Pipettiernadel dann in die in dem dritten Flüssigkeitsgefäß enthaltene Flüssigkeit eingetaucht, es wird ein zu transferierendes Flüssigkeitsvolumen ansaugt, die Pipettiernadel wird aus der Flüssigkeit ausgetaucht und zu einem vierten Flüssigkeitsgefäß verfahren, in das das zu transferierende Flüssigkeitsvolumen abgegeben wird. Die Pipettiernadel wird dann nochmals zur Waschstation verfahren, wird dort gewaschen und anschließend wieder zu dem ersten Flüssigkeitsgefäß verfahren. In diesem Fall wird die Pause zwischen einer ersten und einer zweiten Anzahl von Wiederholungen der Schritte a)-d) beim einem ersten Transfer eines Flüssigkeitsvolumens von einem ersten Flüssigkeitsgefäß in ein zweites Flüssigkeitsgefäß genutzt, um einen zweiten, unabhängigen Transfervorgang durchzuführen. Dies hat den Vorteil, dass ein wegen eines unplausiblen Füllstands eines Flüssigkeitsgefäßes problematischer Transfervorgang die Durchführung weiterer notwendiger Transfervorgänge nicht unnötig verzögert und so der gewünschte Durchsatz des automatischen Analysegeräts beibehalten wird.

In dem erfindungsgemäßen Verfahren zum Transfer eines Flüssigkeitsvolumens von einem ersten Flüssigkeitsgefäß in ein zweites Flüssigkeitsgefäß kann es sich bei dem ersten (und bei dem dritten) Flüssigkeitsgefäß um ein Probengefäß, das z.B. eine Körperflüssigkeitsprobe enthält, oder um einen Reagenzflüssigkeitsbehälter, der eine Reagenzflüssigkeit enthält, handeln. Bei dem zweiten (und bei dem vierten) Flüssigkeitsgefäß handelt es sich bevorzugt um ein Reaktionsgefäß oder um eine Messzelle, wie beispielsweise eine Küvette oder eine Vertiefung einer Mikrotitrationsplatte.

Ein weiterer Gegenstand der vorliegenden Erfindung ist ein automatisches Analysegerät mit mindestens einer an einem automatisch verfahrbaren oder schwenkbaren Transferarm befestigten Pipettiernadel, die einen Füllstandsensor aufweist, und mit einer Mehrzahl von Aufnahmepositionen für die Aufnahme von Flüssigkeitsgefäßen und mit einer Steuerung, die so konfiguriert ist, dass sie ein erfindungsgemäßes Verfahren zum Transfer eines Flüssigkeitsvolumens von einem ersten Flüssigkeitsgefäß in ein zweites Flüssigkeitsgefäß steuert. Die Steuerung ist insbesondere so konfiguriert, dass sie folgende Schritte steuert:
a) Eintauchen der Pipettiernadel in eine in dem ersten Flüssigkeitsgefäß enthaltene Flüssigkeit und Messen der Füllstandhöhe;
b) Vergleichen der gemessenen Füllstandhöhe mit einer vorgegebenen Mindestfüllstandhöhe und einer vorgegebenen Maximalfüllstandhöhe;
c) Feststellen, dass die gemessene Füllstandhöhe entweder
   i. die vorgegebene Maximalfüllstandhöhe überschreitet, oder
   ii. die vorgegebene Maximalfüllstandhöhe unterschreitet und die vorgegebene Minimalfüllstandhöhe überschreitet, oder
   iii. die vorgegebene Minimalfüllstandhöhe unterschreitet,
d) Austauchen der Pipettiernadel aus der Flüssigkeit,
und wobei - wenn festgestellt wird, dass die gemessene Füllstandhöhe die vorgegebene Maximalfüllstandhöhe überschreitet oder die vorgegebene Minimalfüllstandhöhe unterschreitet - ohne Ansaugen eines Flüssigkeitsvolumens die Pipettiernadel aus der Flüssigkeit ausgetaucht wird und dann die Schritte a)-d) sooft wiederholt werden bis festgestellt wird, dass die gemessene Füllstandhöhe die vorgegebene Maximalfüllstandhöhe unterschreitet und die vorgegebene Minimalfüllstandhöhe überschreitet und dann vor dem Austauchen der Pipettiernadel das zu transferierende Flüssigkeitsvolumen angesaugt wird und anschließend in das zweite Flüssigkeitsgefäß transferiert wird.

In einer bevorzugten Ausführungsform ist die Steuerung ferner so konfiguriert, dass maximal zehn vorzugsweise maximal drei, vier oder fünf Wiederholungen der Schritte a)-d) unmittelbar nacheinander durchgeführt werden.

Grundsätzlich ist die Steuerung bevorzugt so konfiguriert, dass sie alle Varianten und Ausführungsformen des zuvor beschriebenen erfindungsgemäßen Verfahrens steuern kann.

In einer Ausführungsform des erfindungsgemäßen automatischen Analysegeräts umfasst das Gerät zusätzlich mindestens eine Waschstation für Pipettiernadeln.

In einer weiteren Ausführungsform des erfindungsgemäßen automatischen Analysegeräts weist die Pipettiernadel einen kapazitiven Füllstandsensor auf.

Ein Ausführungsbeispiel der Erfindung wird anhand von Zeichnungen näher erläutert. Darin zeigen:
- FIG 1: eine schematische Darstellung der Entnahme eines Flüssigkeitsvolumens aus einem Flüssigkeitsgefäß,
- FIG 2: ein Ablaufdiagramm eines Verfahrens zum Transfer eines Flüssigkeitsvolumens von einem ersten in ein zweites Flüssigkeitsgefäß.

Gleiche Teile sind in allen Figuren mit denselben Bezugszeichen versehen.

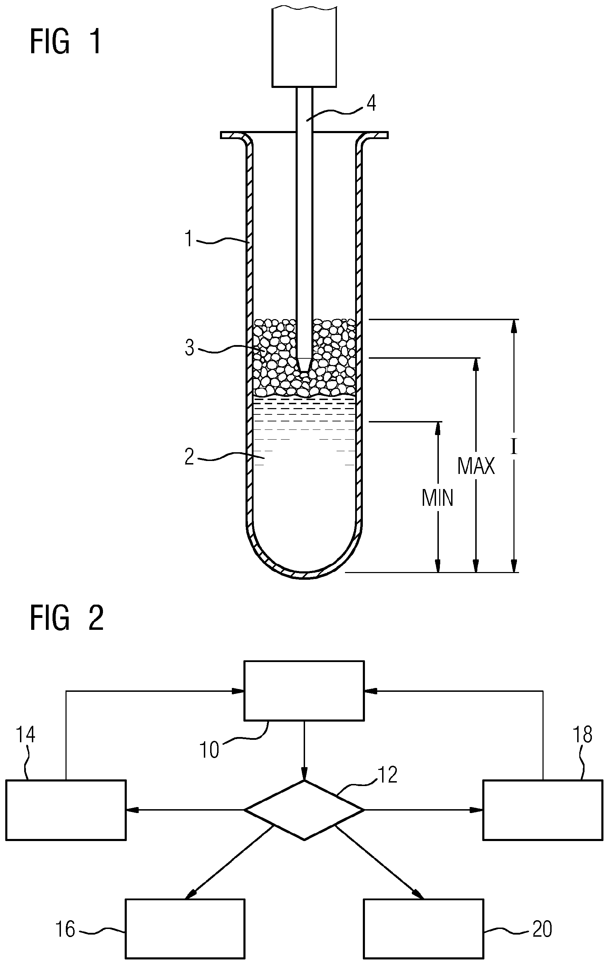

FIG 1 zeigt eine schematische Darstellung eines Probengefäßes 1, das eine humane Plasmaprobe enthält. Das Probengefäß 1 befindet sich in einem nicht näher dargestellten automatischen Analysegerät, das dafür ausgebildet ist, vollautomatisch verschiedenste Analysen in Blut, Plasma, Serum, Urin oder anderen Körperflüssigkeiten durchzuführen, ohne dass hierfür Aktivitäten eines Benutzers notwendig wären.

Auf der Plasmaflüssigkeit 2 befindet sich eine Schaumschicht 3. Eine Pipettiernadel 4, die an einem ebenfalls nicht näher dargestellten automatisch verfahrbaren Transferarm des Analysegeräts befestigt ist, ist zur Entnahme eines Teilvolumens der Plasmaprobe in das Probengefäß 1 eingeführt worden. Die Pipettiernadel 2 weist einen nicht näher dargestellten Füllstandsensor auf, der eine Berührung der Pipettiernadelspitze mit einer Flüssigkeitsoberfläche detektiert. Auf diese Weise ist der Füllstand der Flüssigkeit im Flüssigkeitsgefäß messbar.

Im gezeigten Fall war eine bestimmte Menge der Plasmaflüssigkeit 2 mittels einer automatischen Pipettiervorrichtung aus einem nicht näher dargestellten Primärprobenröhrchen entnommen und in das Probengefäß 1 pipettiert worden. Aus der bekannten Menge der transferierten Plasmaflüssigkeit 2 und den bekannten Abmessungen des Probengefäßes 1 wurde von dem Analysegerät ein Sollwert für den Füllstand der Plasmaflüssigkeit 2 in dem Probengefäß 1 berechnet. Unter Berücksichtigung einer gewissen Toleranz (+/-) wurden eine Maximalfüllstandhöhe MAX und eine Minimalfüllstandhöhe MIN bestimmt.

In der hier gezeigten Situation, in der eine Teilmenge der Plasmaflüssigkeit 2 entnommen werden soll, wird jedoch eine Füllstandhöhe I bestimmt, die die berechnete Maximalfüllstandhöhe MAX überschreitet, weil bereits die Berührung der Pipettiernadelspitze mit dem Schaum 3 als eine Berührung mit einer Flüssigkeitsoberfläche detektiert wird. Da die gemessene Füllstandhöhe I die zulässige Maximalfüllstandhöhe MAX überschreitet, wird zur Vermeidung von Pipettierungenauigkeiten keine Flüssigkeit angesaugt. Um eine präzise Flüssigkeitsentnahme aus dem Probengefäß 1 möglichst doch noch zu ermöglichen, wird das in FIG 2 schematisch dargestellte Verfahren angewandt.

FIG 2 stellt ein Ablaufdiagramm eines Verfahrens zum automatischen Transfer eines Plasmaflüssigkeitsvolumens aus dem in FIG 1 gezeigten Probengefäß 1 in eine Küvette dar. Das Verfahren wird in einem automatischen Analysegerät durchgeführt, welches unter anderem eine an einem verfahrbaren Transferarm befestigte Pipettiernadel 4 mit einem kapazitiven Füllstandsensor aufweist.

In Schritt 10 wird die Pipettiernadel 4 abgesenkt und in die in dem Probengefäß 1 enthaltene Plasmaflüssigkeit eingetaucht, und es wird die Füllstandhöhe I gemessen. Außerdem wird in Schritt 10 die gemessene Füllstandhöhe I mit einer vorgegebenen Mindestfüllstandhöhe MIN und einer vorgegebenen Maximalfüllstandhöhe MAX verglichen. In Schritt 12 wird geprüft, ob die gemessene Füllstandhöhe entweder die vorgegebene Maximalfüllstandhöhe MAX überschreitet oder die vorgegebene Maximalfüllstandhöhe MAX unterschreitet und die vorgegebene Minimalfüllstandhöhe MIN überschreitet oder die vorgegebene Minimalfüllstandhöhe MIN unterschreitet. Wird in Schritt 12 festgestellt, dass die gemessene Füllstandhöhe I die vorgegebene Maximalfüllstandhöhe MAX überschreitet oder die vorgegebene Minimalfüllstandhöhe MIN unterschreitet (in diesem Beispiel wird die Maximalfüllstandhöhe MAX überschritten), wird daraufhin in Schritt 14 die Pipettiernadel 4 ohne Ansaugen eines Flüssigkeitsvolumens aus der Plasmaflüssigkeit ausgetaucht, und die Schritte 10, 12 und 14 sooft wiederholt, höchstens jedoch fünfmal, bis in Schritt 12 festgestellt wird, dass die gemessene Füllstandhöhe I die vorgegebene Maximalfüllstandhöhe MAX unterschreitet und die vorgegebene Minimalfüllstandhöhe MIN überschreitet. Wenn dieser Fall eintritt, wird dann in Schritt 16 das zu transferierende Plasmaflüssigkeitsvolumen angesaugt, die Pipettiernadel 4 wird ausgetaucht und anschließend zu der Küvette verfahren, in die das Plasmaflüssigkeitsvolumen abgegeben wird.

Tritt dieser Fall, dass ein plausibler Füllstand in Schritt 12 schließlich gemessen wird, nicht ein, wird in Schritt 18 die Pipettiernadel 4 ohne Ansaugen eines Flüssigkeitsvolumens aus der Plasmaflüssigkeit ausgetaucht und für eine Zeitspanne von mindestens 300 Sekunden nicht wieder in die Flüssigkeit wieder eingetaucht. Nach Ablauf dieser Zeitspanne werden die Schritte 10, 12 und 14 nochmals sooft wiederholt, höchstens jedoch wieder fünfmal, bis in Schritt 12 festgestellt wird, dass die gemessene Füllstandhöhe I die vorgegebene Maximalfüllstandhöhe MAX unterschreitet und die vorgegebene Minimalfüllstandhöhe MIN überschreitet.

Tritt auch dann, wenn Schritt 18 ausgeführt wurde, der Fall, dass ein plausibler Füllstand in Schritt 12 schließlich gemessen wird, nicht ein, wird in Schritt 20 das Probengefäß 1 von einer weiteren Flüssigkeitsentnahme ausgeschlossen, weil das Risiko eine fehlerhaften Pipettierung zu groß ist. Dazu wird das Probengefäß 1 mit einer Information markiert, die einen automatischen Zugriff der Pipettiervorrichtung verhindert. Anschließend wird das Probengefäß 1 in einen Abfallbehälter überführt.

### BEZUGSZEICHENLISTE

- 1: Probengefäß
- 2: Plasmaflüssigkeit
- 3: Schaumschicht
- 4: Pipettiernadel
- 10-20: Verfahrensschritte

- MIN: Minimalfüllstandhöhe
- MAX: Maximalfüllstandhöhe
- I: gemessene Füllstandhöhe

## Patentansprüche

1. Verfahren zum Transfer eines Flüssigkeitsvolumens von einem ersten Flüssigkeitsgefäß in ein zweites Flüssigkeitsgefäß, wobei eine an einem automatisch verfahrbaren oder schwenkbaren Transferarm befestigte Pipettiernadel, die einen Füllstandsensor aufweist, verwendet wird, das Verfahren umfassend die Schritte:
a) Eintauchen der Pipettiernadel in die in dem ersten Flüssigkeitsgefäß enthaltenen Flüssigkeit und Messen der Füllstandhöhe;
b) Vergleichen der gemessenen Füllstandhöhe mit einer vorgegebenen Mindestfüllstandhöhe und einer vorgegebenen Maximalfüllstandhöhe;
c) Feststellen, dass die gemessene Füllstandhöhe entweder
i. die vorgegebene Maximalfüllstandhöhe überschreitet, oder
ii. die vorgegebene Maximalfüllstandhöhe unterschreitet und die vorgegebene Minimalfüllstandhöhe überschreitet, oder
iii. die vorgegebene Minimalfüllstandhöhe unterschreitet,
d) Austauchen der Pipettiernadel aus der Flüssigkeit,
**dadurch gekennzeichnet, dass**
- wenn festgestellt wird, dass die gemessene Füllstandhöhe die vorgegebene Maximalfüllstandhöhe überschreitet oder die vorgegebene Minimalfüllstandhöhe unterschreitet - ohne Ansaugen eines Flüssigkeitsvolumens die Pipettiernadel aus der Flüssigkeit ausgetaucht wird und dann die Schritte a)-d) sooft wiederholt werden bis festgestellt wird, dass die gemessene Füllstandhöhe die vorgegebene Maximalfüllstandhöhe unterschreitet und die vorgegebene Minimalfüllstandhöhe überschreitet und dann vor dem Austauchen der Pipettiernadel das zu transferierende Flüssigkeitsvolumen angesaugt wird und anschließend in das zweite Flüssigkeitsgefäß transferiert wird.

2. Verfahren gemäß Anspruch 1, wobei maximal zehn vorzugsweise maximal drei, vier oder fünf Wiederholungen der Schritte a)-d) unmittelbar nacheinander durchgeführt werden.

3. Verfahren gemäß Anspruch 2, wobei - wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet - die Pipettiernadel ohne Ansaugen eines Flüssigkeitsvolumens aus der Flüssigkeit ausgetaucht wird und für eine Zeitspanne von mindestens 5-600 Sekunden nicht in die Flüssigkeit wieder eingetaucht wird.

4. Verfahren gemäß Anspruch 3, wobei die Pipettiernadel nach Ablauf der Zeitspanne von mindestens 5-600 Sekunden wieder in die in dem ersten Flüssigkeitsgefäß enthaltene Flüssigkeit eingetaucht wird und das Verfahren gemäß einem der Ansprüche 1 bis 3 wiederholt wird.

5. Verfahren gemäß einem der Ansprüche 3 und 4, wobei die Pipettiernadel während der Zeitspanne von mindestens 5-600 Sekunden zu einer Waschstation verfahren wird, dort gewaschen wird und anschließend wieder zu dem ersten Flüssigkeitsgefäß verfahren wird.

6. Verfahren gemäß einem der Ansprüche 3 und 4, wobei die Pipettiernadel während der Zeitspanne von mindestens 5-600 Sekunden zu einer Waschstation verfahren wird, dort gewaschen wird und anschließend zu einem dritten Flüssigkeitsgefäß verfahren wird, dann in die in dem dritten Flüssigkeitsgefäß enthaltene Flüssigkeit eingetaucht wird, ein zu transferierendes Flüssigkeitsvolumen ansaugt, aus der Flüssigkeit ausgetaucht wird und zu einem vierten Flüssigkeitsgefäß verfahren wird, in das das zu transferierende Flüssigkeitsvolumen abgegeben wird, dann nochmals zur Waschstation verfahren wird, dort gewaschen wird und anschließend wieder zu dem ersten Flüssigkeitsgefäß verfahren wird.

7. Verfahren gemäß Anspruch 2, wobei -wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet, die Pipettiernadel ohne Ansaugen eines Flüssigkeitsvolumens aus der Flüssigkeit ausgetaucht wird und das erste Flüssigkeitsgefäß von einer weiteren Flüssigkeitsentnahme ausgeschlossen wird.

8. Verfahren gemäß einem der vorhergehenden Ansprüche, wobei das erste Flüssigkeitsgefäß eine Probenflüssigkeit oder eine Reagenzflüssigkeit enthält, und wobei das zweite Flüssigkeitsgefäß ein Reaktionsgefäß oder eine Messzelle ist.

9. Automatisches Analysegerät mit mindestens einer an einem automatisch verfahrbaren oder schwenkbaren Transferarm befestigten Pipettiernadel, die einen Füllstandsensor aufweist, und mit einer Mehrzahl von Aufnahmepositionen für die Aufnahme von Flüssigkeitsgefäßen und mit einer Steuerung, die so konfiguriert ist, dass sie ein Verfahren zum Transfer eines Flüssigkeitsvolumens von einem ersten Flüssigkeitsgefäß in ein zweites Flüssigkeitsgefäß mit den folgenden Schritten steuert:
a) Eintauchen der Pipettiernadel in eine in dem ersten Flüssigkeitsgefäß enthaltene Flüssigkeit und Messen der Füllstandhöhe;
b) Vergleichen der gemessenen Füllstandhöhe mit einer vorgegebenen Mindestfüllstandhöhe und einer vorgegebenen Maximalfüllstandhöhe;
c) Feststellen, dass die gemessene Füllstandhöhe entweder
i. die vorgegebene Maximalfüllstandhöhe überschreitet, oder
ii. die vorgegebene Maximalfüllstandhöhe unterschreitet und die vorgegebene Minimalfüllstandhöhe überschreitet, oder
iii. die vorgegebene Minimalfüllstandhöhe unterschreitet,
d) Austauchen der Pipettiernadel aus der Flüssigkeit,
**dadurch gekennzeichnet, dass** die Steuerung ferner so konfiguriert ist, dass
- wenn festgestellt wird, dass die gemessene Füllstandhöhe die vorgegebene Maximalfüllstandhöhe überschreitet oder die vorgegebene Minimalfüllstandhöhe unterschreitet - ohne Ansaugen eines Flüssigkeitsvolumens die Pipettiernadel aus der Flüssigkeit ausgetaucht wird und dann die Schritte a)-d) sooft wiederholt werden bis festgestellt wird, dass die gemessene Füllstandhöhe die vorgegebene Maximalfüllstandhöhe unterschreitet und die vorgegebene Minimalfüllstandhöhe überschreitet und dann vor dem Austauchen der Pipettiernadel das zu transferierende Flüssigkeitsvolumen angesaugt wird und anschließend in das zweite Flüssigkeitsgefäß transferiert wird.

10. Automatisches Analysegerät gemäß Anspruch 9, wobei die Steuerung ferner so konfiguriert ist, dass maximal zehn vorzugsweise maximal drei, vier oder fünf Wiederholungen der Schritte a)-d) unmittelbar nacheinander durchgeführt werden.

11. Automatisches Analysegerät gemäß einem der Ansprüche 9 und 10, wobei die Steuerung ferner so konfiguriert ist, dass - wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet - die Pipettiernadel ohne Ansaugen eines Flüssigkeitsvolumens aus der Flüssigkeit ausgetaucht wird und für eine Zeitspanne von mindestens 5-600 Sekunden nicht in die Flüssigkeit wieder eingetaucht wird.

12. Automatisches Analysegerät gemäß Anspruch 11, wobei die Steuerung ferner so konfiguriert ist, dass die Pipettiernadel nach Ablauf der Zeitspanne von mindestens 5-600 Sekunden wieder in die in dem ersten Flüssigkeitsgefäß enthaltene Flüssigkeit eingetaucht wird und dass das Verfahren zum Transfer eines Flüssigkeitsvolumens von einem ersten Flüssigkeitsgefäß in ein zweites Flüssigkeitsgefäß mit den Schritten gemäß einem der Ansprüche 9 bis 11 wiederholt wird.

13. Automatisches Analysegerät gemäß einem der Ansprüche 11 und 12, ferner aufweisend mindestens eine Waschstation für Pipettiernadeln, wobei die Steuerung ferner so konfiguriert ist, dass die Pipettiernadel während der Zeitspanne von mindestens 5-600 Sekunden zu der Waschstation verfahren wird, dort gewaschen wird und anschließend wieder zu dem ersten Flüssigkeitsgefäß verfahren wird.

14. Automatisches Analysegerät gemäß einem der Ansprüche 11 und 12, ferner aufweisend mindestens eine Waschstation für Pipettiernadeln, wobei die Steuerung ferner so konfiguriert ist, dass die Pipettiernadel während der Zeitspanne von mindestens 5-600 Sekunden zu der Waschstation verfahren wird, dort gewaschen wird und anschließend zu einem dritten Flüssigkeitsgefäß verfahren wird, dann in die in dem dritten Flüssigkeitsgefäß enthaltene Flüssigkeit eingetaucht wird, ein zu transferierendes Flüssigkeitsvolumen ansaugt, aus der Flüssigkeit ausgetaucht wird und zu einem vierten Flüssigkeitsgefäß verfahren wird, in das das zu transferierende Flüssigkeitsvolumen abgegeben wird, dann nochmals zur Waschstation verfahren wird, dort gewaschen wird und anschließend wieder zu dem ersten Flüssigkeitsgefäß verfahren wird.

15. Automatisches Analysegerät gemäß Anspruch 10, wobei die Steuerung ferner so konfiguriert ist, dass -wenn bei jeder Durchführung der maximalen Anzahl an Wiederholungen der Schritte a)-d) festgestellt wird, dass die gemessene Füllstandhöhe die vorgegebene Maximalfüllstandhöhe überschreitet oder die vorgegebene Minimalfüllstandhöhe unterschreitet, die Pipettiernadel ohne Ansaugen eines Flüssigkeitsvolumens aus der Flüssigkeit ausgetaucht wird und das erste Flüssigkeitsgefäß von einer weiteren Flüssigkeitsentnahme ausgeschlossen wird.

16. Automatisches Analysegerät gemäß einem der Ansprüche 9 bis 15, wobei die Pipettiernadel einen kapazitiven Füllstandsensor aufweist.

## Claims

1. A method for transferring a liquid volume from a first liquid vessel into a second liquid vessel, wherein a pipetting needle is used which is secured on an automatically displaceable or pivotable transfer arm and which has a fill-level sensor, said method comprising the steps:
a) immersing the pipetting needle into the liquid contained in the first liquid vessel, and measuring the fill level;
b) comparing the measured fill level with a predefined minimum fill level and a predefined maximum fill level;
c) determining that the measured fill level
i.exceeds the predefined maximum fill level or
ii. is below the predefined maximum fill level and exceeds the predefined minimum fill level or
iii. is below the predefined minimum fill level,
d) withdrawing the pipetting needle from the liquid,
**characterized in that**,
- if it is determined that the measured fill level exceeds the predefined maximum fill level or is below the predefined minimum fill level, the pipetting needle is withdrawn from the liquid without sucking in a liquid volume, and then steps a) to d) are repeated until it is determined that the measured fill level is below the predefined maximum fill level and exceeds the predefined minimum fill level, and then, before the pipetting needle is withdrawn, the liquid volume to be transferred is sucked in and is thereafter transferred into the second liquid vessel.

2. The method as claimed in claim 1, wherein a maximum of ten repeats, preferably a maximum of three, four or five repeats, of steps a) to d) are carried out in immediate succession.

3. The method as claimed in claim 2, wherein if it is determined, upon carrying out the maximum number of repeats of steps a) to d), that the measured fill level exceeds the predefined maximum fill level or is below the predefined minimum fill level, the pipetting needle is withdrawn from the liquid, without sucking in a liquid volume, and it is not immersed again into the liquid until a period of at least 5-600 seconds has elapsed.

4. The method as claimed in claim 3, wherein, after the period of at least 5-600 seconds has elapsed, the pipetting needle is immersed again into the liquid contained in the first liquid vessel, and the method as claimed in one of claims 1 through 3 is repeated.

5. The method as claimed in either of claims 3 and 4, wherein the pipetting needle, during the period of at least 5-600 seconds, is driven to a wash station, is washed there, and is then driven back to the first liquid vessel.

6. The method as claimed in either of claims 3 and 4, wherein the pipetting needle, during the period of at least 5-600 seconds, is driven to a wash station, is washed there, is then driven to a third liquid vessel, is then immersed into the liquid contained in the third liquid vessel, sucks in a liquid volume to be transferred, is withdrawn from the liquid, is driven to a fourth liquid vessel into which the liquid volume to be transferred is discharged, is then driven once again to the wash station, is washed there, and is then driven back to the first liquid vessel.

7. The method as claimed in claim 2, wherein if it is determined, upon carrying out the maximum number of repeats of steps a) to d), that the measured fill level exceeds the predefined maximum fill level or is below the predefined minimum fill level, the pipetting needle is withdrawn from the liquid, without sucking in a liquid volume, and the first liquid vessel is excluded from further removal of liquid.

8. The method as claimed in one of the preceding claims, wherein the first liquid vessel contains a sample liquid or a reagent liquid, and wherein the second liquid vessel is a reaction vessel or a measurement cell.

9. An automated analysis apparatus with at least one pipetting needle which is secured on an automatically displaceable or pivotable transfer arm and which has a fill-level sensor, and with a plurality of receiving positions for receiving liquid vessels, and with a controller which is configured such that it controls a method for transferring a liquid volume from a first liquid vessel into a second liquid vessel with the following steps:
a) immersing the pipetting needle into a liquid contained in the first liquid vessel, and measuring the fill level;
b) comparing the measured fill level with a predefined minimum fill level and a predefined maximum fill level;
c) determining that the measured fill level
i.exceeds the predefined maximum fill level or
ii. is below the predefined maximum fill level and exceeds the predefined minimum fill level or
iii. is below the predefined minimum fill level,
d) withdrawing the pipetting needle from the liquid,
**characterized in that** the controller is moreover configured such that,
- if it is determined that the measured fill level exceeds the predefined maximum fill level or is below the predefined minimum fill level, the pipetting needle is withdrawn from the liquid without sucking in a liquid volume, and then steps a) to d) are repeated until it is determined that the measured fill level is below the predefined maximum fill level and exceeds the predefined minimum fill level, and then, before the pipetting needle is withdrawn, the liquid volume to be transferred is sucked in and is thereafter transferred into the second liquid vessel.

10. The automated analysis apparatus as claimed in claim 9, wherein the controller is moreover configured such that a maximum of ten repeats, preferably a maximum of three, four or five repeats, of steps a) to d) are carried out in immediate succession.

11. The automated analysis apparatus as claimed in either of claims 9 and 10, wherein the controller is moreover configured such that if it is determined, upon carrying out the maximum number of repeats of steps a) to d), that the measured fill level exceeds the predefined maximum fill level or is below the predefined minimum fill level, the pipetting needle is withdrawn from the liquid, without sucking in a liquid volume, and it is not immersed again into the liquid until a period of at least 5-600 seconds has elapsed.

12. The automated analysis apparatus as claimed in claim 11, wherein the controller is moreover configured such that, after the period of at least 5-600 seconds has elapsed, the pipetting needle is immersed again into the liquid contained in the first liquid vessel, and the method for transferring a liquid volume from a first liquid vessel into a second liquid vessel is repeated with the steps as claimed in one of claims 9 through 11.

13. The automated analysis apparatus as claimed in either of claims 11 and 12, moreover having at least one wash station for pipetting needles, wherein the controller is moreover configured such that the pipetting needle, during the period of at least 5-600 seconds, is driven to the wash station, is washed there, and is then driven back to the first liquid vessel.

14. The automated analysis apparatus as claimed in either of claims 11 and 12, moreover having at least one wash station for pipetting needles, wherein the controller is moreover configured such that the pipetting needle, during the period of at least 5-600 seconds, is driven to the wash station, is washed there, is then driven to a third liquid vessel, is then immersed into the liquid contained in the third liquid vessel, sucks in a liquid volume to be transferred, is withdrawn from the liquid, is driven to a fourth liquid vessel into which the liquid volume to be transferred is discharged, is then driven once again to the wash station, is washed there, and is then driven back to the first liquid vessel.

15. The automated analysis apparatus as claimed in claim 10, wherein the controller is moreover configured such that if it is determined, upon carrying out the maximum number of repeats of steps a) to d), that the measured fill level exceeds the predefined maximum fill level or is below the predefined minimum fill level, the pipetting needle is withdrawn from the liquid, without sucking in a liquid volume, and the first liquid vessel is excluded from further removal of liquid.

16. The automated analysis apparatus as claimed in one of claims 9 through 15, wherein the pipetting needle has a capacitive fill-level sensor.

## Revendications

1. Procédé de transvasement d'un volume de liquides d'un premier vase de liquide dans un deuxième vase de liquide, dans lequel on utilise une aiguille de pipetage fixée à un bras de transfert pouvant se déplacer ou pivoter automatiquement, qui a un capteur de niveau, le procédé comprenant les stades :
a) on plonge l'aiguille de pipetage dans le liquide contenu dans le premier vase de liquide et on mesure la hauteur du niveau ;
b) on compare la hauteur du niveau mesurée à une hauteur de niveau minimum donnée à l'avance et à une hauteur de niveau maximum donnée à l'avance ;
c) on constate que la hauteur du niveau mesurée ou bien
i. dépasse la hauteur de niveau maximum donnée à l'avance, ou bien
ii. est inférieure à la hauteur maximum de niveau donnée à l'avance et dépasse la hauteur du niveau minimum donnée à l'avance, ou bien
iii. est inférieure à la hauteur de niveau minimum donnée à l'avance,
d) on sort l'aiguille de pipetage du liquide,
**caractérisé en ce que**
- lorsque l'on constate que la hauteur du niveau mesurée dépasse la hauteur de niveau maximum donnée à l'avance ou est inférieure à la hauteur de niveau minimum donnée à l'avance - on sort du liquide l'aiguille de pipetage sans aspirer un volume de liquide et ensuite on répète les stades a) à d) si souvent que la hauteur de niveau mesurée devient inférieure à la hauteur de niveau maximum donnée à l'avance et dépasse la hauteur de niveau minimum donnée à l'avance et ensuite avant de sortir l'aiguille de pipetage, on aspire le volume de liquide à transvaser et ensuite on le transvase dans le deuxième vase de liquide.

2. Procédé suivant la revendication 1, dans lequel on effectue au maximum dix, de préférence au maximum trois, quatre ou cinq répétitions des stades a) à d) immédiatement les uns après les autres.

3. Procédé suivant la revendication 2, dans lequel - si chaque fois que l'on effectue le nombre maximum de répétitions des stades a) à d) on constate que la hauteur du niveau mesurée dépasse la hauteur du niveau maximum donnée à l'avance ou est inférieure à la hauteur de niveau minimum donnée à l'avance - on sort l'aiguille de pipetage du liquide sans aspirer un volume de liquide et, pendant un laps de temps d'au moins 5 à 600 secondes, on ne la replonge pas dans le liquide.

4. Procédé suivant la revendication 3, dans lequel on plonge l'aiguille de pipetage après écoulement du laps de temps d'au moins 5 à 600 secondes à nouveau dans le liquide contenu dans le premier vase de liquide et on répète le procédé suivant l'une des revendications 1 à 3.

5. Procédé suivant l'une des revendications 3 et 4, dans lequel on déplace l'aiguille de pipetage pendant le laps de temps d'au moins 5 à 600 secondes à un poste de lavage, on l'y lave et ensuite on la ramène au premier vase de liquide.

6. Procédé suivant l'une des revendications 3 et 4, dans lequel on déplace l'aiguille de pipetage pendant le laps de temps d'au moins 5 à 600 secondes à un poste de lavage, on l'y lave et ensuite on la déplace à un troisième vase de liquide, puis on la plonge dans le liquide contenu dans le troisième vase de liquide, on aspire un volume de liquide à transvaser, on la sort du liquide et on la déplace à un quatrième vase de liquide, auquel on cède le volume de liquide à transvaser, puis encore une fois, on la déplace au poste de lavage, on l'y lave et ensuite on la ramène au premier vase de liquide.

7. Procédé suivant la revendication 2, dans lequel - si chaque fois que l'on effectue le nombre maximum de répétitions des stades a) à d) on constate que la hauteur de niveau mesurée dépasse la hauteur de niveau maximum donnée à l'avance ou est inférieure à la hauteur de niveau minimum donnée à l'avance, on sort l'aiguille de pipetage du liquide sans aspirer un volume de liquide et on exclut tout autre prélèvement de liquide du premier vase de liquide.

8. Procédé suivant l'une des revendications précédentes, dans lequel le premier vase de liquide contient un liquide d'échantillon ou un liquide réactif et dans lequel le deuxième vase de liquide est un récipient de réaction ou une cellule de mesure.

9. Appareil d'analyse automatique comprenant au moins une aiguille de pipetage fixée à un bras de transfert pouvant être déplacé ou pouvant pivoter automatiquement, qui a un capteur de niveau, et ayant une pluralité de positions de réception pour la réception de vases de liquide et comprenant une commande qui est configurée de manière à commander un procédé de transvasement d'un volume de liquide d'un premier vase de liquide dans un deuxième vase de liquide par les stades suivants :
a) on plonge l'aiguille de pipetage dans le liquide contenu dans le premier vase de liquide et on mesure la hauteur du niveau;
b) on compare la hauteur du niveau mesurée à une hauteur de niveau minimum donnée à l'avance et à une hauteur de niveau maximum donnée à l'avance;
c) on constate que la hauteur du niveau mesurée ou bien
i. dépasse la hauteur de niveau maximum donnée à l'avance ou bien
ii. est inférieure à la hauteur maximum de niveau donnée à l'avance et dépasse la hauteur du niveau minimum donnée à l'avance ou bien
iii. est inférieure à la hauteur de niveau minimum donnée à l'avance
d) on sort l'aiguille de pipetage du liquide,
**caractérisé en ce que** la commande est configurée en outre de manière à ce que
- lorsque l'on constate que la hauteur du niveau mesurée dépasse la hauteur de niveau maximum donnée à l'avance ou est inférieure à la hauteur de niveau minimum donnée à l'avance - on sort du liquide l'aiguille de pipetage sans aspirer un volume de liquide et ensuite on répète les stades a) à d) si souvent que la hauteur de niveau mesurée devient inférieure à la hauteur de niveau maximum donnée à l'avance et dépasse la hauteur de niveau minimum donnée à l'avance et ensuite avant de sortir l'aiguille de pipetage, on aspire le volume de liquide à transvaser et ensuite on le transvase dans le deuxième vase de liquide.

10. Appareil d'analyse automatique suivant la revendication 9, dans lequel la commande est configurée en outre de manière à ce qu'au maximum dix, de préférence au maximum trois, quatre ou cinq répétitions des stades a) à d) soient effectués immédiatement les uns après les autres.

11. Appareil d'analyse automatique suivant les revendications 9 et 10, dans lequel la commande est configurée en outre de manière à ce que - si chaque fois que l'on effectue le nombre maximum de répétitions des stades a) à d) on constate que la hauteur du niveau mesurée dépasse la hauteur du niveau maximum donnée à l'avance ou est inférieure à la hauteur de niveau minimum donnée à l'avance - on sort l'aiguille de pipetage du liquide sans aspirer un volume de liquide et pendant un laps de temps d'au moins 5 à 600 secondes, on ne la replonge pas dans le liquide.

12. Appareil d'analyse automatique suivant la revendication 11, dans lequel la commande est configurée en outre de manière à ce que l'on plonge l'aiguille de pipetage après expiration du laps de temps d'au moins 5 à 600 secondes à nouveau dans le liquide contenu dans le premier vase de liquide et en ce que l'on répète le procédé de transvasement d'un volume de liquide d'un premier vase de liquide dans un deuxième vase de liquide par les stades suivant l'une des revendications 9 à 11.

13. Appareil d'analyse automatique suivant l'une des revendications 11 et 12, comportant en outre au moins un poste de lavage des aiguilles de pipetage, la commande étant configurée en outre de manière à ce que l'on déplace l'aiguille de pipetage pendant le laps de temps d'au moins 5 à 600 secondes au poste de lavage, on l'y lave et ensuite on la ramène au premier vase de liquide.

14. Appareil d'analyse automatique suivant l'une des revendications 11 et 12, comprenant en outre au moins un poste de lavage des aiguilles de pipetage, la commande étant en outre configurée de manière à ce que l'on déplace l'aiguille de pipetage pendant le laps de temps d'au moins 5 à 600 secondes au poste de lavage, on l'y lave et ensuite on la déplace à un troisième vase de liquide, ensuite on la plonge dans le liquide contenu dans le troisième vase de liquide, on aspire un volume de liquide à transvaser, on la sort du liquide et on la déplace à un quatrième vase de liquide, dans lequel le volume de liquide à transvaser est cédé, ensuite on la déplace encore une fois au poste de lavage on l'y lave et ensuite la ramène au premier vase de liquide.

15. Appareil d'analyse automatique suivant la revendication 10, dans lequel la commande est configurée en outre de manière à ce que - si chaque fois que l'on effectue le nombre maximum de répétition des stades a) à d) on constate que la hauteur de niveau mesurée dépasse la hauteur de niveau maximum donnée à l'avance ou est inférieure à la hauteur de niveau minimum donnée à l'avance, on sort l'aiguille de pipetage du liquide sans aspirer un volume de liquide et on exclut tout autre prélèvement de liquide du premier vase de liquide.

16. Appareil d'analyse automatique suivant l'une des revendications 9 à 15, dans lequel l'aiguille de pipetage a un capteur de niveau capacitif.
